# EUROPEAN PATENT APPLICATION

(11) **EP 2 731 089 A2**
(43) Date of publication of application: **14.05.2014**
(21) Application number: 13187460.4
(22) Date of filing: 04.10.2013
(51) Int. Cl.: G08G 5/00, G08G 5/02

(54) **System and method for enhancing pilot decision making during landing in challenging weather**

(30) Priority: 07.11.2012 US 201213671510
(71) Applicant: Honeywell International Inc., Morristown, NJ 07962-2245 (US)
(72) Inventor: Elahi, Imtiaz, Morristown, NJ New Jersey 07962-2245 (US); Chandran, Nagarajan, Morristown, NJ New Jersey 07962-2245 (US)
(74) Representative: Houghton, Mark Phillip

(57) **Abstract**

A system and method are provided for advising a pilot if it is safe to continue an approach to landing in adverse weather conditions. The system considers flight parameters from the flight management system, stored runway situational parameters, and weather information. The weather information may include, for example, reports, forecasts, and data collected in real time. The advice may be display as one of a plurality of recommendations based on a comparison of the weather information to a threshold.

## Description

### TECHNICAL FIELD

The exemplary embodiments described herein generally relate to enhancing pilot decision making and more particularly to enhancing decision making during approach and landing of an aircraft.

### BACKGROUND

The approach to landing and touch down on the runway of an aircraft is probably the most challenging task a pilot undertakes during normal operation. To perform the landing properly, the aircraft approaches the runway within an envelope of attitude, course, speed, and rate of descent limits. The course limits include, for example, both lateral limits and glide slope limits. An approach outside of this envelope can result in an undesirable positioning of the aircraft with respect to the runway, resulting in possibly discontinuance of the landing attempt.

In some instances, for example in bad weather, visibility may be poor during approach and landing operations, resulting in what is known as instrument flight conditions. During instrument flight conditions, pilots rely on instruments, rather than visual references, to navigate the aircraft. Even during good weather conditions, pilots typically rely on instruments to some extent during the approach.

Because of poor ground infrastructure, there are limits to how low a pilot may descend on approach prior to making visual contact with the runway environment for runways having an instrument approach procedure. Typical low visibility approaches require a combination of avionics equipage, surface (ground) infrastructure, and specific crew training.

The inability of the pilot to make correct landing decisions can be crucial. These decisions are amplified during severe weather conditions. Weather advisories from air traffic control may be helpful, by assisting in determining, for example, landing speed, braking pressure, landing distance, and traffic information, but may not be timely or accurate.

As landing is such a crucial phase of flight, the pilot has to make a very quick assessment of the weather conditions considering inputs received from a plurality of sources, note various flight parameters such as airspeed altitude, rate of descent, attitude, make a quick analysis of all these factors, and decide whether to land or perform a missed approach. This analysis and decision may be very complicated and difficult as weather conditions may change drastically and rapidly. The quality of the pilot's decision primarily depends on his expertise in landing with the prevailing adverse weather conditions and his ability to make a good assessment of the situation.

There are known systems and solutions which provide different types of weather reports to enhance the situational awareness of the pilot and also help him to make the decisions during all different phases of the flights. The Flight Management System (FMS) plays a very vital role in analyzing weather inputs and choosing the flight plan. However, when it comes to landing there is no decision aiding mechanism available with the existing systems to aid the pilot. With this limitation, the pilot has to use his own expertise and judgment based on available information to decide if the landing should be made.

Accordingly, there is a need for a system and method for advising the pilot whether it is safe to land, considering various environmental and flight parameters. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A system and method are provided for aiding the pilot in making a decision whether to perform a landing in adverse weather.

A first exemplary embodiment is a method for recommending whether a pilot should land an aircraft, the method comprising acquiring by a processor current flight parameters from a flight management system; comparing by the processor evaluated current weather data to a threshold; and providing a risk assessment to the pilot of landing the aircraft in consideration of the flight parameters and the comparison of the current weather data to the threshold.

A second exemplary embodiment is a method for recommending whether a pilot should land an aircraft, the method comprising acquiring flight parameters from the flight management system; determining by a processor if current weather data exceeds a threshold for a landing to proceed in consideration of the flight parameters; alerting the pilot that a landing is recommended in view of the weather data not exceeding the threshold; determining landing parameters from the combination of the flight management system and weather reference model sources under adverse weather; selecting one of a plurality of graded recommendations for landing by the processor based on the weather data, flight parameters, and landing parameters; and providing the selected graded recommendation to the pilot.

A third exemplary embodiment is a system for recommending whether a pilot should land an aircraft, comprising circuitry configured to receive weather data; a flight management system configured to monitor flight parameters; an inferencing engine comprising a flight phase based inhibitor configured to allow the inferencing engine to proceed only when the aircraft is in a landing phase; an evidence handler configured to continuously seek for unsafe weather conditions; a correlator configured to seek connection between different weather parameters across multiple weather sources and formulate a pattern of continuously deteriorating weather conditions and formulate an evolving pattern; a hypothesis handler configured to form and evaluate a plurality of hypothesis based on the analyzed weather parameters and related flight parameters, and form a predictive trend for a safe landing evaluation based on the aircraft and different scenarios; a temporal filter configured to remove weather data demonstrating chattering or intermittency; and a landing impact decider configured to generate an advisory message indicating whether the pilot should proceed with a landing; a weather based landing advisory reference model configured to define a model considering a landing site, an airframe, and flight parameters; a learning loop configured to update the weather based landing advisory reference model based on previous landings on challenging weather conditions, previous flight conditions, and previous weather data; and a display configured to display the advisory message.

### BRIEF DESCRIPTION OF THE DRAWINGS

The present invention will hereinafter be described in conjunction with the following drawing figures, wherein like numerals denote like elements, and

FIG. 1 is a block diagram of a system that performs the exemplary embodiments of the present invention;

FIG. 2 is a block diagram of the functions performed by an exemplary embodiment; and

FIG. 3 is a flow chart of a method in accordance with another exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

An advisory system provides to the pilot an assessment of the risk of landing an aircraft in challenging weather conditions, primarily using the weather inputs from different sources. The system considers flight parameters from the flight management system, real time runway situational parameters, and weather parameters. The advice may be display as one of a plurality of recommendations based on a comparison of the weather information to a threshold.

Weather parameters are considered along with flight parameters, for example, attitude, altitude, air speed, gross weight, fuel reserves, and runway situational parameters, for example, the runway available, the airport location, whether the airport is crowded or isolated, runway type, slope, surface conditions, for example, grass, dirt, gravel, or concrete. Weather parameters may be taken from multiple sources, for example, aviation weather reports, pilot weather reports, radar weather reports, and aviation forecasts, and data collected in real time. From the weather reports, weather parameters that affect safe landing, for example, outside temperature, pressure, cloud conditions, wind speed and direction, angle, wind shear, turbulence, storms, precipitation information, ice and snow condition are retrieved. The weather parameters based on its classification, intensity, proximity and magnitude are decoded and then checked for anomalies through the samples taken at regular intervals. A calculation considering all parameters is performed to determine the safe landing advisory.

During the course of this description, like numbers are used to identify like elements according to the different figures that illustrate the various exemplary embodiments.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various clock components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

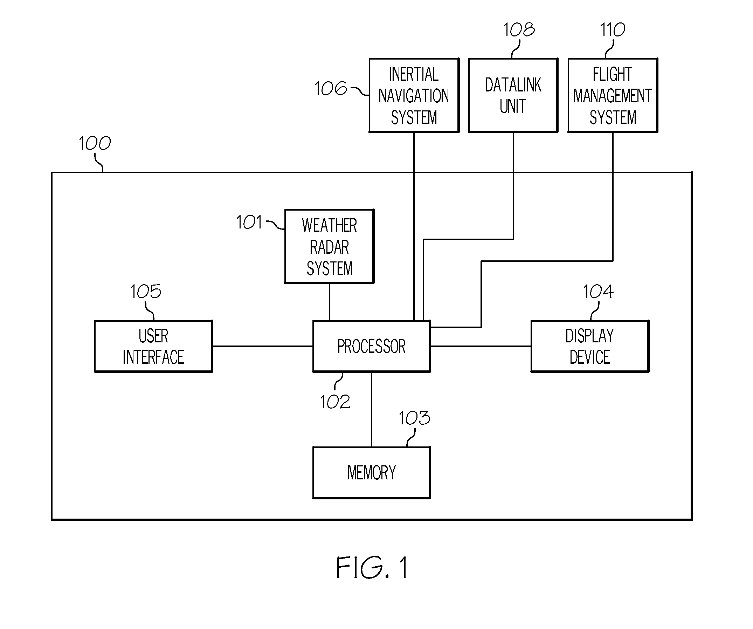

Referring to FIG. 1, an exemplary system 100 is coupled to an inertial navigation system 106, data link unit 108, flight management system 110, and includes a weather radar system 101, a processor 102, a memory 103, a display device 104, and a user interface 105. The processor 102 is electrically coupled to the radar system 101, the display device 104, the inertial navigation system 106, the data link 108, the flight management system 110, the memory 103, and the user interface 105.

The optional weather radar system 101 receives signals that arise from the scattering of transmitted pulses from the external environment including primarily weather and terrain. The received signals are passed to the processor 102, which uses the received signals to update estimates of weather reflectivity and ground normalized radar cross section contained in computer memory (three-dimensional buffer). The radar system 101 may also receive signals from other sources, for example a ground based station, of forecasted or historical weather information in the vicinity of the flight path, wherein the weather information is processed by, for example, the Lymperopoulos mathematical process.

The processor 102 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration.

The memory 103 may be realized as RAM memory, flash memory, EPROM memory, EEPROM memory, registers, a hard disk, a removable disk, a CD-ROM, or any other form of storage medium known in the art. In this regard, the memory 103 can be coupled to the processor 102 such that the processor 102 can be read information from, and write information to, the memory 103. In the alternative, the memory 103 may be integral to the processor 102. As an example, the processor 102 and the memory 103 may reside in an ASIC. In practice, a functional or logical module/component of the display device 104 might be realized using program code that is maintained in the memory 103. For example, the datalink subsystem 108 may have associated software program components that are stored in the memory 103. Moreover, the memory 103 can be used to store data utilized to support the operation of the system 100, as will become apparent from the following description.

In accordance with an exemplary embodiment, the display device 104 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display device 104 may additionally be implemented as a panel mounted display, a HUD (head-up display) projection, or any one of numerous known technologies. It is additionally noted that the display device 104 may be configured as any one of numerous types of aircraft flight deck displays. For example, it may be configured as a multi-function display, a horizontal situation indicator, or a vertical situation indicator. In the depicted embodiment, however, the display device 104 is configured as a primary flight display (PFD).

The datalink unit 108 enables the host aircraft to communicate with Air Traffic Control (ATC), aircraft in the vicinity through which it receives pilot reports, and other sources of weather data. In this regard, the datalink unit 108 may be used to receive weather forecasts and data by the host aircraft, preferably in compliance with known standards and specifications.

In operation, the system 100 is also configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; and wind direction data. The system 100 is suitably designed to process data obtained from the sources of flight status data in the manner described in more detail herein. In particular, the system 100 can use the flight status data of the host aircraft when rendering the display.

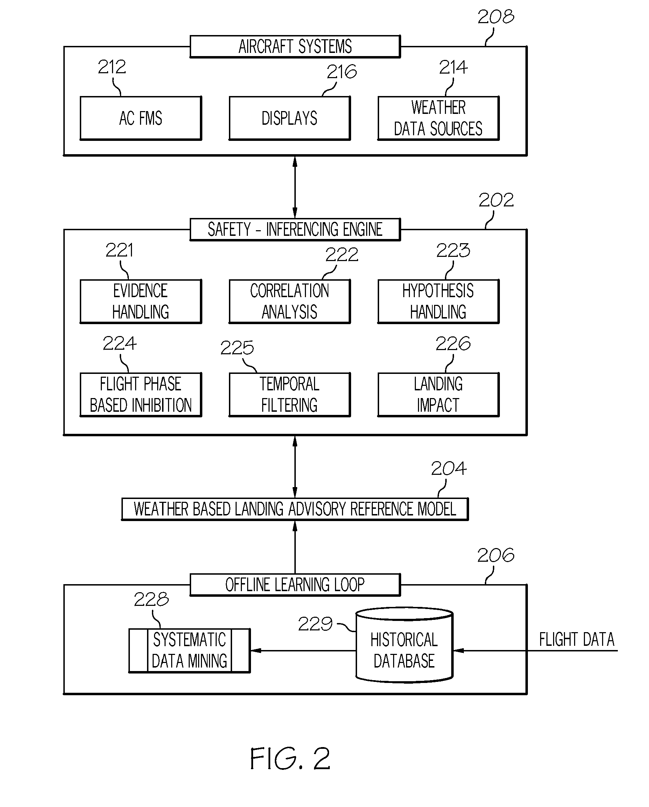

The methodology (see FIG. 2) described herein comprises three functional blocks: an inferencing engine 202, a weather reference model 204, and an offline learning loop 206. A communication path between the inferencing engine 202 and aircraft systems 208 provides parameters from a flight management system 212, weather data sources 214, and to one or more displays 216.

The safety-inferencing engine 202 includes six functional blocks 221-226 which basically turns the weather inputs from different sources into a landing decision advisory. An evidence handler 221 looks for evidence in the weather data and potential safety threats for landing. This is done by the thresholds evaluation approach. For example, airframes have a tolerance limits for different weather components, for example, maximum headwind, crosswind, tailwind, snow level on runway, runway slope limit when landing, standing water, and dew point. The evidence handler will provide a weighted factor for each weather component and they are evaluated for adverse impacts on landing.

The next step in the inferencing engine is to perform correlation analysis 222, wherein weather inputs from one source are correlated to other sources of information.. There can be multiple sources for weather information and each source, for example, weather radar, pilot reports, and air traffic control reports, can report one or more common weather parameters. The weather reports are checked for consistencies and correlations derived there between. Historical data for reliability of the information coming from different sources is also checked to form a basis where evaluation can be done on the prevailing unsafe weather conditions in enabling the weather advisory.

In the hypothesis handling 223, a set of hypothesis is formed based on the inputs from the evidence handler 221 and the correlation analysis 222, and the landing evaluation is performed. Each formed hypothesis is validated by a probability ranking mechanism and continuous monitoring and trending of weather data inputs to see which hypothesis are best with the weaker ones being eliminated. The enabling functional block inhibition 224 allows all the computation to be performed only within landing flight phase so that flight crew gets decision aid mechanism only required. The temporal filter 225 removes the weather inputs that demonstrate characteristics of some chattering or intermittency so that hypothesis validation accuracy remains high.

With the help of evidence handling 221, correlation analysis 222, and hypothesis handling 223, a landing impact 226 is derived and an advisory message is generated.

The inferencing engine 202 can perform the analysis only with proper relationship information provided by the weather based landing advisory reference model 204, which defines the relationship that each block 221-226 has to make with the data they receive from other blocks 221-226 as well from other aircraft systems 208. The reference model itself is a loadable computer program. Landing charts specific to the aircraft and geographical location of the airports are considered to perform calculations so as to compensate for difference in, for example, density altitude, headwinds, temperature and pressure altitude. The landing charts specific to the airframes/airports will be dynamic and loadable. This approach of keeping the reference model separate from the inferencing engine also enables the reuse of the inference engine software to be used across different aircraft platforms simply by changing the reference model. The flight phase based inhibition 224, temporal filtering 225, and the correlation analysis 222 are defined within the reference model. While generating the reference model, the aircraft specific parameter information is also taken into consideration so that the model itself remains configurable.

The offline learning loop 206 is a ground based system which enables continuous learning and updating of the reference model 204. The offline learning loop 206 includes data mining 228 and a historical database 229 to maintain, from previous flights, all landing information, flight conditions, and associated weather scenarios. The information may be, for example, from any source of flight data, for example, a flight data recorder, a quick access recorder, a pilot log, flight operational quality assurance data, or combinations thereof. With this continuous learning, the accuracy of the weather based landing reference model 204 is continuously improved and thereby provides better advisory alerts to the crew during landing.

When the prevailing weather condition is hazardous and a safe landing is questionable, or when the weather conditions make a successful landing risky because the probability exists for the conditions to worsen over a period of the time, an advisory message is displayed to advise the crew that weather is an issue for landing. The weather could be changing so rapidly, or flight parameters could be changing abnormally where generating an advisory message is not feasible resulting in a CAN'T DETERMINE message being displayed.

The advisory messages are generated whenever it is feasible to do so and displayed to the pilot well-in-advance before landing, for example, five to ten minutes prior to landing. This early advisory would greatly assist the pilot in comparison to receiving the advisory just before landing when the pilot workload typically is very high.

The computations are performed essentially in real time, enabling the pilot to take quick and reliable actions based on the landing advisory. The landing advisory message is provided either visually or audibly in the cockpit of the aircraft. When the pilot encounters weather disturbances when approaching a landing, he can opt to use this advisory feature, or it can be automatically enabled. The landing advisory is suggestive in nature only, aiding the pilot decision making process.

This weather based landing advisory would assist the pilot in making a decision whether it is safe to land or a missed approach should be performed. The exemplary embodiments described herein combine the pilot's flying experience substantiated with methodological inputs to aid his decision of whether to land in adverse weather conditions.

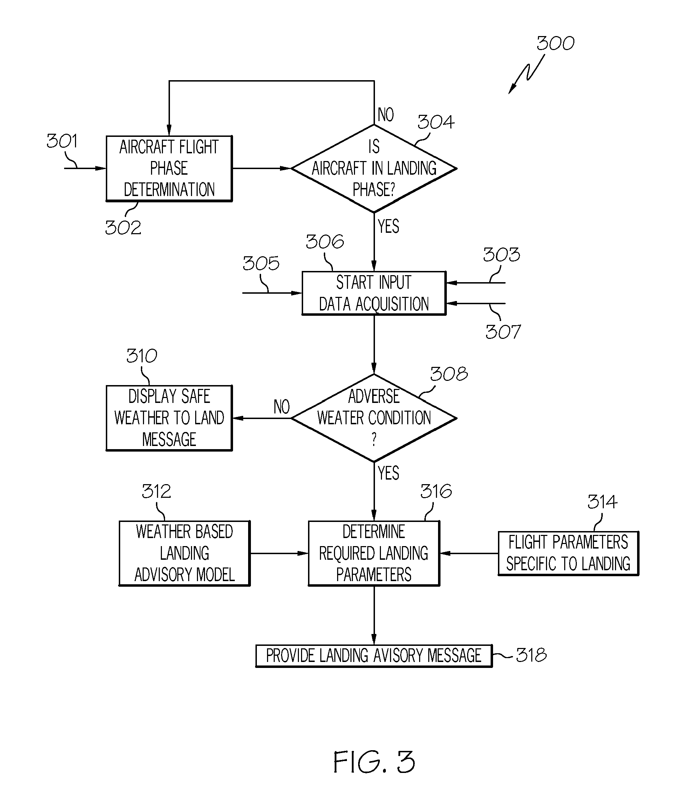

FIG. 3 is a flow chart that illustrates an exemplary embodiment of a landing advisory process 300. The various tasks performed in connection with process 300 may be performed by software, hardware, firmware, or any combination thereof. For illustrative purposes, the following description of process 300 may refer to elements mentioned above in connection with FIG. 2. In practice, portions of process 300 may be performed by different elements of the described system, e.g., a processor, a display element, or a data communication component. It should be appreciated that process 300 may include any number of additional or alternative tasks, the tasks shown in FIG. 3 need not be performed in the illustrated order, and process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

The process 300 comprises determining 302 from flight management system 110 inputs 301 if the aircraft is in a landing phase of flight. If not 304, the determination 302 is periodically repeated. If yes 304, the acquisition of data is initiated 306 by collecting weather data 303, flight parameters 305, and threshold limits 307. Inputs 301 from the flight management system include, for example, the airplane flight phase information such as descent, approach, and go-around. Weather data 303 may be collected from, for example, aviation reports pilot reports, radar, and aviation forecasts, and includes, for example, temperature, air pressure, wind including magnitude and angle, clouds, precipitation, turbulence, storms, and ice/snow. Flight parameters 305, collected from the flight management system 110 include, for example, attitude, altitude, air speed, gross weight, and fuel reserves. The threshold limits 307 are provided by the reference model 204.

If it is determined 308 that an adverse weather condition does not exist based on the threshold limits 307 not being exceeded, a favorable landing advisory is provided 310 to the pilot. If it is determined 308 that an adverse weather condition does exist based on the threshold limits 307 being exceeded, a determination 316 is made of required landing parameters based on weather based reference landing advisory model 312 and flight parameters specific to landing 314. The weather model 312 forecasts the existing weather conditions after filtering the reports from reliable sources. The required landing parameters 316 include, for example, the safe landing performance information inclusive of flight parameters required for landing and runway situational information derived from weather model. Flight parameters specific to landing include, for example, airplane weight, aircraft configuration, landing distance, braking pressure.

From the landing parameters, one of a plurality of graded recommendations are selected and provided as the landing advisory to the pilot. The graded recommendations may define a landing attempt as, for example, hazardous, risky, cautious, or safe. The landing advisories may be displayed in different formats to emphasize the graded recommendation. For example, hazardous may be displayed in red, risky may be displayed in burgundy, caution may be displayed in yellow, and safe may be displayed in green.

A determination is made 308 whether the weather data, if view of the flight parameters, exceeds a threshold. If a threshold is not exceeded, indicating the weather is not adverse; the pilot is alerted 310 that the weather is not unsafe for landing. If the weather is adverse 308, information from weather reference advisory model for landing 312 and flight parameters specific to landing 314 are obtained for determining 316 the required landing parameters. One of a plurality of graded recommendations for landing are selected by the processor 102 based on the weather parameters, flight parameters, and landing parameters and provided 318 to the pilot as the landing advisory.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for recommending whether a pilot should land an aircraft, the method comprising:
acquiring by a processor (102) current flight parameters from a flight management system (110);
comparing (308) by the processor evaluated current weather data to a threshold; and
providing (316) a risk assessment to the pilot of landing the aircraft in consideration of the flight parameters and the comparison of the current weather data to the threshold.

2. The method of claim 1 wherein acquiring current flight parameters comprises acquiring at least one of the groups consisting of attitude, altitude, air speed, gross weight, and fuel reserves.

3. The method of claim 1 wherein the comparing step comprises acquiring the weather data from one of the group consisting of aviation weather reports, pilot weather reports, weather radar inputs, aviation forecasts.

4. The method of claim 1 wherein the comparing step comprises defining the threshold as at least one of the group consisting of a maximum tailwind, maximum crosswind, depth of snow on the runway, runway surface coefficient, and standing water on the runway.

5. The method of claim 1 wherein the providing step comprises displaying a message that a landing is not affected by adverse weather.

6. The method of claim 1 wherein the comparing step further comprises determining landing parameters including at least one of the group consisting of runway availability, runway slope, runway surface type, and typical density of traffic; and wherein the providing step further considers the landing parameters.

7. The method of claim 1 wherein the providing step comprises selecting one of a plurality of graded recommendations consisting of one of the group consisting of safe or hazardous.

8. The method of claim 1 wherein the providing step comprises displaying a message indicating a degree of the risk assessment.

9. A system for recommending whether a pilot should land an aircraft, comprising:
circuitry (101) configured to receive weather data;
a flight management system (110) configured to monitor flight parameters;
an inferencing engine (202) comprising:
a flight phase based inhibitor (224) configured to allow the inferencing engine to proceed only when the aircraft is in a landing phase;
an evidence handler (221) configured to continuously seek for unsafe weather conditions;
a correlator (222) configured to seek connection between different weather parameters across multiple weather sources and formulate a pattern of continuously deteriorating weather conditions and formulate an evolving pattern.;
a hypothesis handler (223) configured to form and evaluate a plurality of hypothesis based on the analyzed weather parameters and related flight parameters, and form a predictive trend for a safe landing evaluation based on the aircraft and different scenarios;
a temporal filter (225) configured to remove weather data demonstrating chattering or intermittency; and
a landing impact decider (226) configured to generate an advisory message indicating whether the pilot should proceed with a landing;
a weather based landing advisory reference model (204) configured to define a model considering a landing site, an airframe, and flight parameters;
a learning loop (206) configured to update the weather based landing advisory reference model based on previous landings on challenging weather conditions, previous flight conditions, and previous weather data; and
a display (104) configured to display the advisory message.

10. The system of claim 9 wherein the circuitry is further configured to acquiring the weather data as one of the group consisting of aviation weather reports, pilot weather reports, radar, aviation forecasts.

11. The system of claim 9 wherein the evidence handler is further configured to continuously search for unsafe weather conditions.

12. The system of claim 9 wherein the hypothesis handler is further configured to form and evaluate a plurality of hypothesis based on the analyzed weather parameters and related flight parameters; and form a predictive trend for a safe landing evaluation based on the aircraft and different scenarios.
